# FASCICULE DE BREVET EUROPEEN

(11) **EP 2 758 490 B1**
(45) Date de publication et mention de la délivrance du brevet: **11.09.2019**
(21) Numéro de dépôt: 12775733.4
(22) Date de dépôt: 21.09.2012
(51) Int. Cl.: C09K 21/02, C04B 28/00, C04B 41/50, E04C 2/16, C04B 41/00

(54) **NOUVEAU MATERIAU ARGILO-CELLULOSIQUE**
NEUES CELLULOSETONMATERIAL
NEW CELLULOSE CLAY MATERIAL

(30) Priorité: 23.09.2011 FR 1102899
(43) Date de publication de la demande: 30.07.2014
(73) Titulaire: BTK Matériaux, 87150 Oradour-sur-Vayres (FR); École Nationale Supérieure De Céramique Industrielle, 87068 Limoges Cedex (FR)
(72) Inventeur: LECOMTE , Gilles, 87140 Le Palais sur Vienne (FR); LECOMTE , Gisèle, 87140 Le Palais sur Vienne (FR); BARRE , Olivier, 71490 Saint-Maurice-les-Couches (FR)
(74) Mandataire: Barny, Luc
(86) Numéro de dépôt international: PCT/FR2012/000374
(87) Numéro de publication internationale: WO 2013/041785

(56) Documents cités:
- AT-U1- 11 690
- US-A- 4 947 611
- "ARGILUS - ENDUIT MONOCOUCHE", Naturel21 , novembre 2010 (2010-11), XP002675973, Extrait de l'Internet: URL:http://www.naturel21.com/upload/file/f iches-techniques/Argilus%20-%20Fiche%20tec hnique%20Enduit%20monocouche.pdf [extrait le 2012-05-11]
- "Valentines and Scarva Earthstone Clay Descriptions and Glossary", CMT Potters Supplies , 23 février 2009 (2009-02-23), pages 9-12, XP002675974, Extrait de l'Internet: URL:http://www.ctmpotterssupplies.co.uk/Ne w_Folder/WebCTMclayandglossary.pdf [extrait le 2012-05-11]
- "L'argile-kapok c'est bien l'argile-coton c'est mieux ...hum en attendant l'argile-lin !", Argile cellulose Paperclay , 7 février 2009 (2009-02-07), XP002675975, Extrait de l'Internet: URL:http://argilecellulose.unblog.fr/2009/ 02/07/largile-kapok-cest-bien-largile-coto n-cest-mieux-hum-en-attendant-largile-lin/ [extrait le 2012-05-14]

## Description

La présente invention concerne le domaine des matériaux composites à matrice argileuse pour une application comme barrière de protection contre le feu et/ou l'eau. L'invention a également pour objet l'utilisation d'un tel matériau composite dans le domaine plus particulièrement de la protection des objets précieux.

Il est connu, depuis longtemps, d'utiliser des matériaux à base d'argile, crue ou cuite, dans les domaines des arts plastiques et de la construction.

A titre d'illustration de l'art antérieur, il peut être cité dans le domaine de la construction, «Argilus-Enduit monocouche, Nature 21, novembre 2010 (XP002675973)» qui décrit un enduit monocouche destiné à être appliqué comme peinture. Ce document, outre une application différente, n'envisage aucunement l'utilisation de coton et encore moins un matériau « bi-composant » pour une utilisation comme barrière de protection.

Peut également être mentionné le brevet US4947611 qui décrit une paroi dans le domaine du bâtiment à base d'argile, de paille pouvant éventuellement comprendre des fibres de palme ou de chanvre. Outre le fait que ce document ne pose pas le problème technique abordé par la présente invention, il n'en apporte pas non plus la solution en sens qu'il n'est aucunement décrit un matériau composite constitué d'une pâte plastique infiltrée par une barbotine comprenant des fibres de kapok fortement hydrophobes

De même, dans le domaine de la poterie, les publications « Valentines and Scarva Eartstone Clay Descriptions and Glossary ; 23 février 2009 (XP00267594)» ou encore « L'argile-Kapok c'est bien l'argile coton c'est mieux ; 7 février 2009 (XP002675975)» décrivent l'utilisation d'argile combinée à des fibres végétales. Aucun de ces documents ne vise le problème technique de la présente invention et, en outre, aucun ne décrit un matériau « bi-composant » constitué d'une pâte plastique à base d'argile, de coton et de fibres cellulosiques de kapok infiltrée par une barbotine à base d'argile et de coton.

Les argiles sont par définition des matières premières naturelles, à caractère fortement plastique en cru, majoritairement constituées de minéraux argileux et dont les particules ont une taille moyenne inférieure à 2 microns. Compte tenu de leur forte abondance dans les sols et de leur compatibilité positive avec l'environnement, ces matières premières constituent des ressources minérales durables. Elles sont facilement réutilisables, recyclables et peuvent être disposées en fin de vie dans la nature sans risque majeur de pollutions sanitaire et environnementale.

Les minéraux argileux, constituants majeurs de ces argiles, sont des silicates caractérisés par leur structure en feuillet (d'où le terme phyllosilicates généralement utilisé) et sont regroupés en deux familles principales :
i) La famille des phyllosilicates 1:1 (Te-Oc), caractérisée par un feuillet élémentaire constitué par l'empilement d'une couche tétraédrique (généralement siliceuse) et d'une couche octaédrique (principalement alumineuse ou magnésienne). La distance interfoliaire type de ce groupe de phyllosilicate est autour de 0.71 nm ;
ii) La famille des phyllosilicates 2:1 (Te-Oc-Te) pour laquelle le feuillet élémentaire est caractérisé par une couche octaédrique prise en sandwich entre deux couches tétraédriques. Par ailleurs, les différentes substitutions hétérovalentes qui se produisent au sein des couches constitutives conduisent à l'apparition d'un déficit de charge globale du feuillet élémentaire. La neutralité électrique est alors assurée par la présence de cations compensateurs de charges dans l'espace interfoliaire. Ces cations sont susceptibles de s'hydrater et/ou d'être échangés suivant les conditions environnantes, d'où le caractère gonflable de certains minéraux argileux de cette famille. La distance basale peut varier de 0.96 to 2 nm

Par souci de clarté, les expressions « argile » et « argiles » pourront être utilisées indifféremment dans la présente description, et désignent ici les argiles non cuite, autrement appelée argile crue, aussi bien naturelles que de synthèse qui ont une structure et des propriétés comme vu plus haut. Les matières premières argileuses comportent généralement des phyllosilicates comme les montmorillonites, les vermiculites, les illites, les chlorites, la saponite, la beidellite, la glauconite, la kaolinite, la muscovite, l'halloysite et le talc. Les proportions massiques respectives de ces phyllosilicates dans les argiles sont variables de 0 à 100%. De ce fait le ou les deux minéraux argileux prépondérants donnent leurs noms à l'argile considérée.

Les argiles sont essentiellement utilisées dans le domaine des céramiques et comme charges minérales dans l'industrie chimique. Leur disponibilité et leur non toxicité leur confèrent une place de choix comme base minérale pour le développement et l'élaboration d'écoproduits s'inscrivant dans une démarche de développement durable.

Plus spécifiquement, le couplage d'argiles avec des fibres cellulosiques, notamment d'origine végétale, peut contribuer à activer des interactions permettant d'obtenir des propriétés finales particulières et uniques.

Les récents développements sur les composites argilo-cellulosique sont très orientés vers des applications dans le secteur du bâtiment et de l'habitat.

De manière générale, il est connu d'utiliser l'argile, qui de par ses propriétés de plasticité reste difficile à mettre en forme, en combinaison avec des additifs tels que des fibres cellulosiques. De telles fibres permettent de renforcer la structure du matériau en améliorant la cohésion de l'argile humide lors de la mise en forme du matériau tout en en limitant la friabilité lors du séchage de l'argile. De manière générale, l'apport de fibres cellulosiques permet de consolider, de renforcer le matériau mais aussi de le rendre plus léger.

Les fibres couramment utilisées à cet effet sont le sisal, le chanvre, le jute et le lin en association avec des phyllosilicates montmorillonites, sépiolite et kaolinite. Les propriétés recherchées dans ce cadre sont la stabilité thermique et la résistance au feu. Cette dernière propriété est essentiellement assurée à travers l'ajout de surfactants, tels que des retardateurs de feu à base d'halogénures.

En présence de feu, l'argile subira des transformations thermiques, conférant alors globalement des niveaux de propriétés mécaniques plus importantes au matériau comparativement à l'état initial. Il ressort également de l'art antérieur que, en présence de feu, les fibres cellulosiques sont détruites. Cette décomposition rend alors le matériau poreux, ce qui en augmente le caractère de résistance au feu en diminuant sa conductivité thermique. A contrario, cela diminue la résistance mécanique du matériau qui devient alors fragile et en diminue également la résistance à l'eau.

Cela met en évidence un problème technique auquel se heurte l'Homme de l'art, à savoir disposer d'un matériau suffisamment flexible (ce qui sous-entend une forte proportion de cellulose) présentant une résistance au feu suffisante (ce qui sous-entend une faible proportion de cellulose).

Afin de pallier cet inconvénient, la littérature fait apparaître deux techniques, toutes deux faisant appel à des additifs.

La première repose sur l'utilisation d'un additif faisant office de « retardateur ». A ce titre, peut être mentionnée la demande de brevet JP590088359 qui décrit l'utilisation de poudres fines d'éléments inorganiques (argile, talc) et de pâte à papier traitée avec du phosphate d'ammonium. Le phosphate d'ammonium est un sel utilisé comme composé ignifugeant qui permet de retarder la combustion de la cellulose en élevant la température de destruction de celle-ci par le biais de réactions chimiques complexes.

La seconde repose sur l'utilisation d'additifs faisant office de « renforts inorganiques ». A ce titre, peuvent être citées les demandes de brevet EP0408098 et EP0109782 qui décrivent des matériaux dont la matrice est additionnée d'éléments de renfort de structure inorganiques comme de la laine de verre, des fibres de verre, du mica, etc. L'introduction d'éléments de renfort de structure inorganiques permet de conserver une quantité importante de cellulose dans le matériau afin que celui-ci reste suffisamment flexible pour sa mise en forme mais aussi suffisamment résistant mécaniquement en cas d'incendie.

De manière générale, le matériau composite objet de la présente invention se distingue des matériaux argilo-cellulosiques existant de par sa composition avantageuse permettant l'absence de tels additifs comme des « retardateurs » ou des « charges de renforts inorganiques ».

De manière surprenante, le matériau composite selon l'invention comprend une grande proportion de fibres cellulosiques sans pour cela comprendre de composants autres visant à en faciliter l'incorporation.

En ce sens, il convient de noter que, au regard des matériaux décrits pour le bâtiment, dans l'art antérieur, l'introduction d'une très faible proportion de fibres cellulosiques a pour fonction d'alléger les produits fini après combustions desdites fibres lors de l'étape de cuisson. La présente invention va à l'encontre de ces techniques en ce sens qu'aucune étape de cuisson n'est nécessaire pour l'obtention du matériau composite. Il en résulte que la forte proportion de fibres cellulosiques se retrouve au sein du produit final et c'est justement cette forte proportion qui confère audit matériau composite ses propriétés recherchées (perméabilité gazeuse, imperméabilité à l'eau, résistance mécanique, non inflammabilité, isolation thermique, etc.).

La présente invention a donc pour objet un matériau composite comprenant entre 30 et 95% en masse d'argile non cuite, entre 1 et 50% de fibres cellulosiques courtes et entre 1 et 30% de fibres cellulosiques longues pour une utilisation comme barrière de protection contre le feu et/ou l'eau, ledit matériau composite comprenant i) une pâte plastique comprenant entre 30 et 95% en masse d'argile, entre 1 et 50% en masse de fibres courtes de coton d'une taille comprise entre 0,5 et 1 mm et entre 1 à 30% en fibres longues de kapok d'une taille comprise entre 5 et 12 mm et ii) une barbotine comprenant entre 30 et 95% en masse d'argile et entre 1 et 50% en masse de fibres courtes de coton d'une taille comprise entre 0,5 et 1 mm, ladite pâte plastique une fois mise en forme étant infiltrée par ladite barbotine.

Selon une forme d'exécution, ledit matériau composite peut comprendre entre 40 et 95% en masse d'argile non cuite.

Selon une forme d'exécution, ledit matériau composite peut comprendre entre 50 et 95% en masse d'argile non cuite.

Selon une forme d'exécution, ledit matériau composite peut comprendre entre 60 et 95% en masse d'argile non cuite.

Selon une forme d'exécution, ledit matériau composite peut comprendre entre 70 et 95% en masse d'argile non cuite.

Selon une forme d'exécution, ledit matériau composite peut comprendre entre 80 et 95% en masse d'argile non cuite.

Selon une forme d'exécution, ledit matériau composite peut comprendre entre 5 et 40% de fibres cellulosiques courtes.

Selon une forme d'exécution, ledit matériau composite peut comprendre entre 5 et 30% de fibres cellulosiques courtes.

Selon une forme d'exécution, ledit matériau composite peut comprendre entre 5 et 20% de fibres cellulosiques courtes.

Selon une forme d'exécution, ledit matériau composite peut comprendre entre 5 et 10% de fibres cellulosiques courtes.

Selon une forme d'exécution, ledit matériau composite peut comprendre entre 1 et 20% de fibres cellulosiques longues.

Selon une forme d'exécution, ledit matériau composite peut comprendre entre 1 et 10% de fibres cellulosiques longues.

Par l'expression « fibres cellulosiques courtes » ou plus généralement « fibres courtes », il faut comprendre toute fibre ayant une longueur inférieure à 3mm, préférentiellement inférieure à 2mm et encore plus préférentiellement inférieure à 1mm. De manière préférée, les fibres courtes selon l'invention ont une longueur comprise entre 0,5 et 1mm.

Par l'expression « fibres cellulosiques longues» ou plus généralement « fibres longues», il faut comprendre toute fibre ayant une longueur supérieure ou égales à 3mm, préférentiellement supérieure à 4mm et encore plus préférentiellement supérieure à 5mm. De manière préférée, les fibres longues selon l'invention ont une longueur comprise entre 5 et 12mm.

Selon un aspect préféré, la présente invention a pour objet un matériau composite pour une utilisation comme barrière de protection contre le feu et/ou l'eau, caractérisé en ce qu'il est dépourvu d'additif comme des « retardateurs » ou des « charges de renforts inorganiques ».

Par « additif (s) » au sens de la présente invention, il faut comprendre tout élément pouvant être ajoutés dans la composition du matériau connu de l'Homme de l'art pouvant faire office de « retardateurs » ou de « charges de renforts inorganiques ».

En outre, le matériau composite selon l'invention se différencie également de nombreux matériaux de l'art antérieur en ce sens qu'il est dépourvu de colorant ou de sable.

Il en résulte un nouveau matériau composite à base d'argiles alliant une consolidation sans frittage avec des propriétés de résistance au feu (non inflammable) et à l'eau (waterproof) et de résistance mécanique satisfaisante. Ces caractéristiques sont déterminantes pour assurer les fonctions en service de ces nouveaux produits qui doivent servir de barrière protectrice vis-à-vis des incendies ou des inondations pour la protection, comme cela ressortira de la description plus bas, notamment de documents ou d'objets précieux.

A ce jour, les produits proposés et utilisés pour la protection et/ou la conservation de documents et/ou d'objets précieux ou sensibles ne permettent de garantir qu'une partie des contraintes requises.

A titre d'exemple, peuvent être cités les cartons ignifugés au sel, les plastiques comportant des charges minérales ou encore les coffres forts.

Les cartons ignifugés aux sels permettent certes la protection contre les flammes, mais ne garantissent pas la durabilité vis-à-vis de l'eau (infiltrations des eaux de ruissellement). Par ailleurs, il y a également des risques de migration des sels vers les documents, ce qui peut s'avérer dommageable pour la conservation d'ouvrages très anciens (patrimoine).

Les plastiques comportant des charges minérales garantissent une excellente durabilité vis-à-vis de l'eau, par contre, la résistance aux flammes est quelque peu diminuée. Le caractère respirant est très limité dans ce cas, ce qui peut favoriser le développement de microorganismes néfastes à la conservation des documents.

Les coffres forts présentent des propriétés de résistance au feu et de durabilité satisfaisantes. Toutefois, ils ne sont pas respirants, dans le sens où ils n'ont pas de perméabilité gazeuse, sont très lourds de par leurs constitutions et nécessitent un encombrement important pour leur manipulation et leur maintenance.

La présente invention permet de pallier l'ensemble des inconvénients cités plus haut en proposant un nouveau matériau composite constitué de matières premières naturelles compatibles avec l'environnement et présentant des propriétés suffisantes en terme de résistance aux flammes, mais également en terme de respirabilité et de résistance à l'eau.

A ce jour, de telles solutions alliant des argiles et des fibres cellulosiques courtes et longues ne sont pas décrites, ni même suggérées, par l'art antérieur, et ce a fortiori dans le domaine concerné.

Selon une forme de réalisation préférée, le matériau composite selon l'invention comprend préférentiellement entre 75 et 88 % en masse d'argile non cuite.

En pratique, l'argile non cuite, autrement appelée argile crue, comprend des phyllosilicates issue de la famille 1:1 (Te-Oc) et/ou de la famille 2:1 (Te-Oc-Te).

De manière préférée, le matériau composite selon l'invention comprend des phyllosilicates sélectionnés parmi les montmorillonites, les vermiculites, les illites, les chlorites, la saponite, la beidellite, la glauconite, la kaolinite, la muscovite, l'halloysite et le talc.

De manière plus préférée, le matériau composite selon l'invention comprend des phyllosilicates sélectionnés parmi les montmorillonites, les vermiculites, les illites, la kaolinite, la muscovite et l'halloysite.

Selon une autre forme de réalisation, le matériau composite selon l'invention comprend entre 5 et 30 % en masse de fibres cellulosiques courtes.

Selon l'invention, lesdites fibres cellulosiques courtes consistent en des fibres de coton.

Selon une autre forme de réalisation, le matériau composite selon l'invention comprend entre 3 et 20 % en masse de fibres cellulosiques longues.

Selon l'invention, lesdites fibres cellulosiques longues consistent en des fibres de kapok.

De telles fibres longues proviennent des fruits de kapokier (*Ceiba Pentandra*), végétaux plutôt localises dans la ceinture tropicale.

Un des aspects avantageux de l'invention réside dans la teneur en fibres de kapok du matériau composite. En effet, les fibres de kapok sont connues pour présenter un caractère hydrophobe rendant ces dernières difficiles à mélanger avec de l'argile. La plupart des matériaux argileux utilisés dans le domaine du bâtiment comprenant des fibres de kapok ne comprennent que de très faibles proportions de telles fibres, généralement inférieures à 0,5% en masse. Un aspect particulièrement innovant du matériau composite selon l'invention repose sur la forte proportion de fibres de kapok intégrée au matériau composite. Comme cela ressortira du reste de la description, l'incorporation d'une telle proportion de fibres de kapok est rendue possible, outre de par la taille même de ces fibres, de par le procédé d'obtention du matériau selon l'invention.

Selon un aspect avantageux, l'invention décrit un matériau composite pour une utilisation comme barrière de protection contre le feu et/ou l'eau, caractérisé en ce qu'il comprend entre 30 et 95% en masse d'argile non cuite, entre 1 et 50% de fibres de coton et entre 1 et 30% de fibres de kapok.

Un autre aspect innovant de l'invention repose sur le mode même d'obtention du matériau composite décrit.

Selon une forme de réalisation préférée, l'élaboration du matériau composite selon l'invention implique l'utilisation d'une pâte plastique et d'une barbotine. Selon ce mode préféré, il n'est plus nécessaire d'utiliser des additifs, comme décrits plus haut, pour obtenir un matériau composite présentant l'ensemble des propriétés souhaitées de résistance mécanique, de résistance au feu et de résistance à l'eau.

Par « pâte plastique », il faut comprendre une pâte qui peut se déformer aisément tout en gardant la forme imposée sans s'affaisser sous son propre poids. Selon une forme préférée, la pâte plastique selon l'invention présente une teneur en eau comprise entre 20 et 200% par rapport à la masse totale de solide.

Par « barbotine », il faut comprendre une pâte fluide, avec une contrainte seuil faible (proche de 0,1 Pa) et un comportement rhéofluidifiant (exposant n < 1) et peu thixotrope (structuration faible de la barbotine au repos).

L'élaboration de la pâte plastique comporte une étape de mélange à sec des argiles (teneur entre 30 et 95% en masse) avec les fibres cellulosiques courtes (teneur entre 1% et 50% en masse). Selon une forme d'exécution préférée de l'invention, ce mélange peut être effectué à une vitesse allant de 10 à 50 rpm pendant une durée variable de 30s à 24h, et plus précisément de 2 min à 6h.

Par la suite un malaxage humide est effectué avec une quantité d'eau appropriée de manière à obtenir une pâte plastique comportant de manière préférée, entre 30 et 200 % d'eau par rapport à la masse solide. Selon une forme de réalisation préférée, l'eau peut comporter des surfactants pour assurer une meilleure plasticité qui sera alors adaptée au procédé de mise en forme. Les surfactants ajoutés dans l'eau sont, de manière préférée mais non limitative, de l'hexamétaphosphate de sodium (HMP) et/ou du silicate de sodium (Na₂SO₃) et/ou du carbonate de sodium (Na₂CO₃) à des concentrations de 0,05% à 1,5% par rapport à la masse solide, étant entendu que tout surfactant équivalent pourra être substitué par l'Homme de l'art.

Les fibres cellulosiques longues sont alors progressivement ajoutées lors de ce malaxage humide à un débit pouvant aller de 1 à 20 kg/h afin d'introduire à la fin entre 1 à 30% en masse de fibres de kapok.

Ce malaxage en voie humide est effectué, selon une forme d'exécution préférée mais non limitative, à une vitesse comprise entre 5 et 50 rpm pendant 2 min jusqu'à 24h (de manière préférée entre 5 min et 10h).

La pâte plastique ainsi obtenue pourra alors être mise en forme selon l'application recherchée.

A titre d'exemple, dans le cadre de la réalisation d'outils de protection d'objets ou de documents précieux, ladite pâte pourra être laminée entre deux rouleaux, préférentiellement à température ambiante, pour obtenir des préformes d'épaisseur uniforme correspondant à l'utilisation envisagée. Ces dernières pourront alors être portées à maturation dans un premier temps entre 19 et 40°C sous hygrométrie contrôlée (humidité relative variable entre 40 et 100%) pendant une durée entre 1h et 10 jours. Puis dans un second temps, ces préformes pourront avantageusement être mises sous film protecteur et la maturation se poursuivra à température ambiante pendant au moins 12h et au plus 20 jours. C'est au cours de cette maturation que les interactions argilo-cellulosiques seront exacerbées avec l'action des surfactants ajoutés pour assurer une bonne cohésion de l'ensemble après mise en forme et séchage.

Pour ce qui est de la barbotine, les argiles (teneur entre 30 et 95% en masse) et les fibres cellulosiques courtes (teneur entre 1 et 50% en masse) sont mélangées à sec. De l'eau, pouvant comporter des surfactants comme HMP, carbonate de sodium et/ou silicate de sodium (proportions entre 0.05 et 1% par rapport à la masse solide), est introduite dans le mélange sec de manière à obtenir une barbotine finale de densité comprise entre 1,3 et 2,1.

Après une durée d'imprégnation au repos, préférentiellement entre 1h et 6h, l'ensemble est mélangé à nouveau. La barbotine est ensuite laissée à maturation pendant au moins 6h avant utilisation pour que, le cas échéant, l'action dispersante et stabilisante des surfactants soit optimale.

Afin d'obtenir le produit de combinaison final correspondant au matériau composite selon l'invention, la pâte plastique est infiltrée sous pression avec la barbotine.

Selon une forme de réalisation préférée, ladite infiltration peut être réalisée par CSP, baroïde, ou tout autre technique équivalente connue de l'Homme de l'art.

L'invention décrit un matériau composite qui comprend i) une pâte plastique constituée d'argiles, de fibres cellulosiques courtes et de fibres cellulosiques longues, et ii) une barbotine constituée d'argiles et de fibres cellulosiques courtes, ladite pâte plastique étant infiltrée par ladite barbotine de manière à obtenir le matériau composite.

C'est la combinaison de ces deux formulations par infiltration de la pâte plastique avec la barbotine qui permet de garantir l'obtention du matériau composite selon l'invention.

Selon un mode de réalisation, l'invention décrit un matériau composite comprenant i) une pâte plastique constituée de 30 à 95% en masse d'argile, de 1 à 50% en masse de fibres de coton et de 1 à 30% en masse de fibres de kapok, et ii) une barbotine constituée de 30 à 95% en masse d'argile et de 1 à 50% en masse de fibres de coton, ladite pâte plastique étant infiltrée par ladite barbotine de manière à obtenir le matériau composite.

Après l'infiltration, et éventuellement une mise en forme appropriée à l'utilisation souhaitée, un séchage est effectué, préférentiellement entre 20°C et 100°C sous atmosphère contrôlée (humidité relative entre 40% et 80%), pendant une durée pouvant aller de 2h à 7 jours.

Selon un aspect préféré de l'invention, le matériau composite présente une résistance maximale en flexion 3 points d'au moins 1 MPa.

De manière préférée, ladite résistance mécanique en flexion 3 points du matériau composite selon l'invention, au terme du séchage, est comprise entre 2 et 10 MPa.

La détermination de la résistance mécanique peut être réalisée par toute technique connue de l'Homme de l'art. A titre préféré, mais non limitatif, la résistance mécanique en flexion 3 points est déterminée selon le protocole et les standards de la norme ISO 5628, dont le contenu est incorporé ici par référence.

Selon un deuxième aspect préféré de l'invention, le matériau composite selon l'invention est suffisamment résistant à l'infiltration de l'eau (durabilité vis-à-vis de l'eau) et doit pouvoir résister à l'infiltration de l'eau sous inondation pendant au moins 1h jusqu'à 10h.

Selon un aspect avantageux, le matériau composite selon l'invention présente une résistance à l'infiltration de l'eau pendant au moins 2 heures.

La détermination de la résistance à l'infiltration de l'eau peut être réalisée par toute technique connue de l'Homme de l'art. A titre préféré, mais non limitatif, la résistance à l'infiltration de l'eau est déterminée selon le protocole et les standards de la norme NF EN 20535, dont le contenu est incorporé ici par référence.

Un troisième aspect préféré de l'invention repose sur le caractère non inflammable du matériau composite. De manière préférée, ledit matériau composite appartient à la classe M0 suivant la spécification européenne, norme NF EN 60695-11-10/A1.

Selon encore un autre aspect avantageux de l'invention, le matériau composite présente une résistance à la chaleur ΔT d'au moins 350°C.

Selon encore un mode de réalisation préféré de l'invention, le matériau composite présente un caractère isolant. Plus particulièrement, le matériau composite selon l'invention présente une conductivité thermique inférieure à 0,5 W/(m.K), préférentiellement inférieure à 0,4 W/(m.K) et encore plus préférentiellement inférieure à 0,3 W/(m.K).

Selon un mode préférée de l'invention, le matériau composite est caractérisé par une conductivité thermique de 0,24 W/(m.K). Cet aspect est avantageux car ledit matériau composite est, de ce fait, considéré comme un matériau isolant. Pour ce qui est de la détermination de la conductivité thermique, toute technique connue de la personne de l'art pourra être utilisée.

La perméabilité gazeuse importante finale du matériau composite selon l'invention est également un paramètre clé qui assure la circulation continue et contrôlée de flux gazeux. Ce caractère respirant est par exemple très important dans la conservation et la protection des documents anciens et du patrimoine.

Selon un aspect supplémentaire, l'invention a pour objet un procédé pour la préparation d'un matériau composite pour une utilisation comme barrière de protection contre le feu et/ou l'eau, ledit procédé comprenant les étapes de :
a) préparation d'une pâte plastique comprenant entre 30 et 95% en masse d'argile, entre 1 et 50% en masse de fibres courtes de coton d'une taille comprise entre 0,5 et 1 mm, entre 1 à 30% en fibres longues de kapok d'une taille comprise entre 5 et 12 mm et entre 20 et 200% d'eau par rapport à la masse solide ;
b) préparation d'une barbotine comprenant entre 30 et 95% en masse d'argile, entre 1 et 50% en masse de fibres courtes de coton d'une taille comprise entre 0,5 et 1 mm et de l'eau en quantité suffisante pour obtenir une densité comprise entre 1,3 et 2,1 ;
c) infiltration sous pression de la pâte plastique obtenue à l'étape a) avec la barbotine obtenue à l'étape b).

De manière préférée, ladite étape d'infiltration est réalisée sous une pression comprise entre 30 et 50 bars.

Selon une forme de réalisation de l'invention, ledit procédé est caractérisé en ce que ladite pâte plastique est obtenue par :
a) malaxage à sec d'argile et de fibres de coton, pour obtenir un mélange homogène,
b) malaxage humide du mélange obtenu en a) avec ajout de l'eau et des fibres longues de kapok pour obtenir ladite pâte plastique.

Selon une autre forme préférée du procédé selon l'invention, ladite barbotine est obtenue par :
a) mélange à sec d'argile et de fibres cellulosiques courtes,
b) ajout d'eau,
c) maturation de la barbotine.

De manière préférée, l'eau additionnée comprend au moins un surfactant. A titre d'exemples non limitatifs, les surfactants utilisés peuvent consister en l'hexamétaphosphate de sodium, le silicate de sodium, le carbonate de sodium ou tout autre agent chimique présentant les mêmes propriétés.

Selon un mode préféré d'exécution de l'invention, ledit procédé comprend, préalablement à l'étape d'infiltration sous pression de la pâte plastique avec la barbotine, une étape de mise en forme de ladite pâte plastique par laminage à température ambiante pour obtenir des préformes d'épaisseur uniforme.

Selon un mode de réalisation, l'invention décrit un matériau composite comprenant i) une pâte plastique constituée de 30 à 95% en masse d'argile, de 1 à 50% en masse de fibres de coton et de 1 à 30% en masse de fibres de kapok, ladite pâte plastique ayant été mise en forme par laminage, ou toute autre technique équivalente connue de l'Homme de l'art, et ii) une barbotine constituée de 30 à 95% en masse d'argile et de 1 à 50% en masse de fibres de coton, ladite pâte plastique étant infiltrée par ladite barbotine de manière à obtenir le matériau composite.

De manière également préférée, ladite étape de mise en forme peut être suivie d'une étape de maturation des préformes sous hygrométrie contrôlée.

Il apparaîtra à l'Homme de l'art que le matériau composite selon l'invention pourra avantageusement être utilisé dans un grand nombre d'applications. Les applications envisagées ci-dessous doivent donc être comprises comme des exemples préférés, mais aucunement comme des exemples limitatifs.

Selon un premier aspect de l'invention, il est envisagé l'utilisation d'un matériau composite selon l'invention pour la préparation d'emballage de protection d'objets.

Selon un deuxième aspect de l'invention, il est envisagé l'utilisation d'un matériau composite selon l'invention pour la préparation de paroi ou écran de protection dans le domaine du bâtiment.

Selon un troisième aspect de l'invention, il est envisagé l'utilisation d'un matériau composite selon l'invention pour la préparation de boitiers de protection de systèmes électriques.

Au regard des éléments décrits ci-dessus, il apparaît clairement que le matériau composite selon l'invention est un produit innovant et original alliant des propriétés souvent antagonistes et pouvant de ce fait être utilisé dans divers domaines, entre autre la protection contre le feu et l'eau de documents et d'objets précieux aussi bien personnels que communautaire tel que patrimoine, ou héritage, par exemple.

Selon un aspect particulier de l'invention, il est envisagé une enveloppe de protection constituée d'un matériau composite qui comprend entre 30 et 95% en masse d'argile non cuite, entre 1 et 50% de fibres cellulosiques courtes et entre 1 et 30% de fibres cellulosiques longues.

Selon un autre aspect particulier de l'invention, il est envisagé une enveloppe de protection constituée d'un matériau composite qui comprend entre 30 et 95% en masse d'argile non cuite, entre 1 et 50% de fibres de coton et entre 1 et 30% de fibres de kapok.

Selon un aspect préféré de l'invention il est envisagé une enveloppe de protection constituée d'un matériau composite qui comprend 88% d'argile, 7% de fibres cellulosiques courtes et 5% de fibres cellulosiques longues, composition massique sur la base de la matière sèche; le rapport eau/solide étant de 0,96.

Selon un autre aspect préféré de l'invention il est envisagé une enveloppe de protection constituée d'un matériau composite qui comprend 91% d'argile, 7% de fibres cellulosiques courtes et 2% de fibres cellulosiques longues, composition massique sur la base de la matière sèche; le rapport eau/solide étant de 1,38.

Selon un autre aspect préféré de l'invention il est envisagé une enveloppe de protection constituée d'un matériau composite comportant 84% d'argile, 9% de fibres cellulosiques courtes et 7% de fibres cellulosiques longues, composition massique sur la base de la matière sèche ; le rapport eau/solide étant de 2.

Par « enveloppe de protection », il faut comprendre tout contenant venant englober l'objet à protéger. Une telle enveloppe peut consister en une enveloppe, un sac, un coffre, un coffrage, une armoire, une boite, un boîtier, un emballage ou tout autre dispositif permettant d'assurer cette même fonction de protection en isolant l'objet à protéger du milieu extérieur.

Les exemples ci-après décrivent certains détails de l'invention.

### Exemple 1 : Préparation de la barbotine

Mélange mécanique à sec de 10,45 kg d'argiles et de 0,55 kg de pulpe de cellulose (fibres courtes) à une vitesse de 10 rpm pendant 10 min. Puis ajout de 17 L d'eau comportant 1% de silicate de sodium et 0,05% de carbonate de sodium au mélange solide. Homogénéisation/mélangeage de la préparation, après 1h d'imprégnation au repos, au turbo déliteur à 20 rpm pendant 30 min. la barbotine est laissée pour maturation pendant 12h.

### Exemple 2 : Préparation de la pâte plastique

Malaxage à sec de 4,35 kg d'argiles avec 0,3 kg de pulpe de cellulose pendant 15 min à 10 rpm; suivi de l'addition de 2,2 L d'eau (20 rpm pendant 20 min). Le malaxage en voie humide se poursuit après l'ajout de 0,2 L d'eau comportant du silicate de sodium et du carbonate de sodium (1,2% et 0,1% par rapport à la masse du solide respectivement). Par la suite 2L d'eau et 0,35 kg de fibres de kapok sont progressivement rajoutées (2kg/h) pendant le malaxage qui dure alors 3h à 35 rpm. La pâte plastique résultante est alors laminée entre deux papiers de feutre et les préformes planes obtenues sont soumises au vieillissement à 25°C sous atmosphère saturée en eau pendant 10 jours.

### Exemple 3 : produit final

La pâte plastique obtenue à l'exemple 2, au terme de la maturation, est infiltrée avec la barbotine de l'exemple 1 sous une pression de 40 bars. Les produits verts obtenus sont mis à séchés à température ambiante pendant 24h puis à 60°C pendant 24h. Les caractéristiques finales obtenues dans ce cas sont les suivantes : résistance maximale en flexion 3 points de 5,7 MPa, résistance à l'infiltration de l'eau pendant 2h, résistance à la chaleur ΔT de 350°C. Ce qui correspond, pour un produit d'épaisseur 7 mm, au fait qu'après soumission d'une face pendant 1h à une température de 1000°C, à une augmentation de température de la face opposée de 650°C.

### Exemple 4 : Détermination de la résistance en flexion 3 points

La détermination de la résistance à la flexion a été réalisée par mise en oeuvre du protocole de la norme ISO 5628 (données non représentées).

Les résultats obtenus montrent que le matériau composite selon l'invention présente une résistance maximale en flexion 3 points d'au moins 1 MPa, préférentiellement d'au moins 2 MPa. Ainsi pour un composite argilo-cellulosique selon l'invention comportant 88% d'argile, 7% de fibres de coton et 5% de fibres de kapok, composition massique sur la base de la matière sèche, le rapport eau/solide étant de 0,96 la résistance maximale en flexion 3 points est d'au moins 1 MPa. Pour un composite argilo-cellulosique selon l'invention comportant 91% d'argile, 7% de fibres de coton et 2% de fibres de kapok, composition massique sur la base de la matière sèche, le rapport eau/solide étant de 1,38 la résistance maximale en flexion 3 points est d'au moins 2 MPa.

### Exemple 5 : Détermination de la résistance à l'infiltration d'eau

La détermination de la résistance à l'infiltration d'eau a été réalisée par mise en oeuvre du protocole de la norme NF EN 20535 intitulée durabilité vis-à-vis de l'eau (données non représentées).

Les résultats obtenus montrent que le matériau composite selon l'invention présente une résistance à l'infiltration d'eau d'au moins 1 heure pour un composite argilo-cellulosique selon l'invention comportant 88% d'argile, 7% de fibres de coton et 5% de fibres de kapok, composition massique sur la base de la matière sèche ; le rapport eau/solide étant de 0,96, et d'au moins 1h30 pour un composite argilo-cellulosique comportant 84% d'argile, 9% de fibres de coton et 7% de fibres de kapok, composition massique sur la base de la matière sèche ; le rapport eau/solide étant de 2.

### Exemple 6 : Détermination de la résistance à la chaleur

La détermination de la résistance à la chaleur a été réalisée par mise en oeuvre du protocole de la norme NF EN 60695-11-10/A1 (données non représentées).

Les résultats obtenus montrent que le matériau composite selon l'invention présente une résistance à la chaleur ΔT d'au moins 350°C. Ces résultats sont obtenus avec par exemple pour des composites selon l'invention comportant :
- 88% d'argile, 7% de fibres de coton et 5% de fibres de kapok, composition massique sur la base de la matière sèche; le rapport eau/solide étant de 0,96 ;
- 91% d'argile, 7% de fibres de coton et 2% de fibres de kapok, composition massique sur la base de la matière sèche; le rapport eau/solide étant de 1,38 ;
- 84% d'argile, 9% de fibres de coton et 7% de fibres de kapok, composition massique sur la base de la matière sèche; le rapport eau/solide étant de 2.

**Exemple 7 : Détermination de la perméabilité gazeuse.** La détermination de la perméabilité gazeuse en appliquant la loi de Darcy (Norme ISO 5636/1, référence 4 de la norme) permet d'estimer le caractère respirant, des composites élaborés selon la présente invention. Les composites élaborés selon les exemples 1, 2 et 3 présentent une perméabilité gazeuse ≥ 2,07 10⁻³ m². Une perméabilité de 8,88 10⁻³ m² est obtenue pour un composite selon l'invention comportant 88% d'argile, 7% de fibres de coton et 5% de fibres de kapok, composition massique sur la base de la matière sèche; le rapport eau/solide étant de 0,96. Une perméabilité de 35,6 10⁻³ m² est obtenue pour le composite comportant 84% d'argile, 9% de fibres de coton et 7% de fibres de kapok, composition massique sur la base de la matière sèche; le rapport eau/solide étant de 2.

## Revendications

1. Matériau composite comprenant entre 30 et 95% en masse d'argile non cuite, entre 1 et 50% de fibres cellulosiques courtes et entre 1 et 30% de fibres cellulosiques longues pour une utilisation comme barrière de protection contre le feu et/ou l'eau, ledit matériau composite étant **caractérisé en ce qu'**il comprend i) une pâte plastique comprenant entre 30 et 95% en masse d'argile, entre 1 et 50% en masse de fibres courtes de coton d'une taille comprise entre 0,5 et 1 mm et entre 1 à 30% en fibres longues de kapok d'une taille comprise entre 5 et 12 mm et ii) une barbotine comprenant entre 30 et 95% en masse d'argile et entre 1 et 50% en masse de fibres courtes de coton d'une taille comprise entre 0,5 et 1 mm, ladite pâte plastique une fois mise en forme étant infiltrée par ladite barbotine.

2. Matériau composite selon la revendication 1, **caractérisé en ce qu'**il est dépourvu d'additif comme des « retardateurs » ou des « charges de renforts inorganiques ».

3. Matériau composite selon la revendication 1 ou 2, **caractérisé en ce que** l'argile non cuite comprend des phyllosilicates sélectionnés parmi les montmorillonites, les vermiculites, les illites, les chlorites, la saponite, la beidellite, la glauconite, la kaolinite, la muscovite, l'halloysite et le talc.

4. Procédé pour la préparation d'un matériau composite pour une utilisation comme barrière de protection contre le feu et/ou l'eau, **caractérisé en ce qu'**il comprend les étapes de :
a) préparation d'une pâte plastique comprenant entre 30 et 95% en masse d'argile, entre 1 et 50% en masse de fibres courtes de coton d'une taille comprise entre 0,5 et 1 mm, entre 1 à 30% en fibres longues de kapok d'une taille comprise entre 5 et 12 mm et entre 20 et 200% d'eau par rapport à la masse solide ;
b) préparation d'une barbotine comprenant entre 30 et 95% en masse d'argile, entre 1 et 50% en masse de fibres courtes de coton d'une taille comprise entre 0,5 et 1 mm et de l'eau en quantité suffisante pour obtenir une densité comprise entre 1,3 et 2,1 ;
c) infiltration sous pression de la pâte plastique obtenue à l'étape a) avec la barbotine obtenue à l'étape b).

5. Procédé selon la revendication 4, **caractérisé en ce que** ladite pâte plastique est obtenue par :
a) malaxage à sec d'argile et des fibres de coton, pour obtenir un mélange homogène,
b) malaxage humide du mélange obtenu en 5.a) avec ajout de l'eau et des fibres longues de kapok pour obtenir ladite pâte plastique.

6. Procédé selon la revendication 4, **caractérisé en ce que** ladite barbotine est obtenue par :
a) mélange à sec d'argile et des fibres courtes de coton,
b) ajout d'eau,
c) maturation de la barbotine.

7. Procédé selon l'une quelconque des revendications 4 à 6, **caractérisé en ce que** l'eau additionnée comprend au moins un surfactant.

8. Procédé selon l'une quelconque des revendications 4 à 7, **caractérisé en ce qu'**il comprend préalablement à l'étape d'infiltration sous pression de la pâte plastique avec la barbotine, une étape de mise en forme de ladite pâte plastique par laminage à température ambiante pour obtenir des préformes d'épaisseur uniforme, et éventuellement maturation des préformes sous hygrométrie contrôlée.

9. Utilisation d'un matériau composite selon l'une quelconque des revendications 1 à 3, ou d'un matériau composite obtenu par mise en oeuvre du procédé selon l'une quelconque des revendications 4 à 8, pour la préparation d'emballage de protection d'objets.

10. Utilisation d'un matériau composite selon l'une quelconque des revendications 1 à 3, ou d'un matériau composite obtenu par mise en oeuvre du procédé selon l'une quelconque des revendications 4 à 8, pour la préparation de paroi ou écran de protection dans le domaine du bâtiment.

11. Utilisation d'un matériau composite selon l'une quelconque des revendications 1 à 3, ou d'un matériau composite obtenu par mise en oeuvre du procédé selon l'une quelconque des revendications 4 à 8, pour la préparation de boitiers de protection de systèmes électriques.

## Patentansprüche

1. Verbundmaterial, umfassend zwischen 30 und 95 Massen-% ungebrannten Ton, zwischen 1 und 50 % kurze Cellulosefasern und zwischen 1 und 30 % lange Cellulosefasern, für eine Verwendung als Schutzbarriere gegen Feuer und/oder Wasser, wobei das Verbundmaterial **dadurch gekennzeichnet ist, dass** es i) eine Kunststoffpaste, umfassend zwischen 30 und 95 Massen-% Ton, zwischen 1 und 50 Massen-% kurze Baumwollfasern einer Größe im Bereich zwischen 0,5 und 1 mm und zwischen 1 bis 30 % an langen Kapokfasern einer Größe im Bereich zwischen 5 und 12 mm und ii) einen Schlicker, umfassend zwischen 30 und 95 Massen-% Ton und zwischen 1 und 50 Massen-% kurze Baumwollfasern einer Größe im Bereich zwischen 0,5 und 1 mm umfasst, wobei die Kunststoffpaste, einmal in die Form gebracht, durch den Schlicker infiltriert wird.

2. Verbundmaterial nach Anspruch 1, **dadurch gekennzeichnet, dass** es frei ist von Zusatzstoff wie "Verzögerern" oder "Beladungen mit anorganischen Verstärkungen".

3. Verbundmaterial nach Anspruch 1 oder 2, **dadurch gekennzeichnet, dass** der ungebrannte Ton Phyllosilikate umfasst, ausgewählt aus Montmorilloniten, Vermiculiten, Illiten, Chloriten, Saponit, Beidellit, Glaukonit, Kaolinit, Muskovit, Halloysit und Talk.

4. Verfahren zur Herstellung eines Verbundmaterials für eine Verwendung als Schutzbarriere gegen Feuer und/oder Wasser, **dadurch gekennzeichnet, dass** es die folgenden Schritte umfasst:
a) Herstellung einer Kunststoffpaste, umfassend zwischen 30 und 95 Massen-% Ton, zwischen 1 und 50 Massen-% kurze Baumwollfasern einer Größe im Bereich zwischen 0,5 und 1 mm, zwischen 1 bis 30 % lange Kapokfasern einer Größe im Bereich zwischen 5 und 12 mm und zwischen 20 und 200 % Wasser bezogen auf die feste Masse;
b) Herstellung eines Schlickers, umfassend zwischen 30 und 95 Massen-% Ton, zwischen 1 und 50 Massen-% kurze Baumwollfasern einer Größe im Bereich zwischen 0,5 und 1 mm und Wasser in ausreichender Menge, um eine Dichte im Bereich zwischen 1,3 und 2,1 zu erhalten;
c) Infiltration unter Druck der in Schritt a) erhaltenen Kunststoffpaste mit dem in Schritt b) erhaltenen Schlicker.

5. Verfahren gemäß Anspruch 4, **dadurch gekennzeichnet, dass** die Kunststoffpaste erhalten wird durch:
a) Trockenverknetung des Tons und der Baumwollfasern, um eine homogene Mischung zu erhalten,
b) Feuchtverknetung der in Schritt 5.a) erhaltenen Mischung unter Zugabe von Wasser und der langen Kapokfasern, um die Kunststoffpaste zu erhalten.

6. Verfahren gemäß Anspruch 4, **dadurch gekennzeichnet, dass** der Schlicker erhalten wird durch:
a) Trockenmischung des Tons und der kurzen Baumwollfasern,
b) Zugabe von Wasser,
c) Reifung des Schlickers.

7. Verfahren nach einem der Ansprüche 4 bis 6, **dadurch gekennzeichnet, dass** das zugegebene Wasser mindestens ein Tensid umfasst.

8. Verfahren nach einem der Ansprüche 4 bis 7, **dadurch gekennzeichnet, dass** es dem Schritt der Infiltration der Kunststoffpaste mit dem Schlicker unter Druck vorangehend einen Schritt des Formgebens der Kunststoffpaste durch Laminierung bei Umgebungstemperatur, um Vorformlinge gleichförmiger Dicke zu erhalten, und gegebenenfalls Reifung der Vorformlinge unter kontrollierter Luftfeuchtigkeit umfasst.

9. Verwendung eines Verbundmaterials nach einem der Ansprüche 1 bis 3, oder eines durch Durchführen des Verfahrens nach einem der Ansprüche 4 bis 8 erhaltenen Verbundmaterials, für die Herstellung von Schutzverpackung von Objekten.

10. Verwendung eines Verbundmaterials nach einem der Ansprüche 1 bis 3, oder eines durch Durchführen des Verfahrens nach einem der Ansprüche 4 bis 8 erhaltenen Verbundmaterials, für die Herstellung von Schutzwand oder -schirm im Bauwesen.

11. Verwendung eines Verbundmaterials nach einem der Ansprüche 1 bis 3, oder eines durch Durchführen des Verfahrens nach einem der Ansprüche 4 bis 8 erhaltenen Verbundmaterials, für die Herstellung von Schutzgehäusen elektrischer Systeme.

## Claims

1. Composite material comprising between 30 and 95% by mass of raw clay, between 1 and 50% of short cellulose fibres and between 1 and 30% of long cellulose fibres for a use as a protective barrier against fire and/or water, said composite material being **characterised in that** it comprises i) a plastic paste comprising between 30 and 95% by mass of clay, between 1 and 50% by mass of short cotton fibres of a size of between 0.5 and 1mm and between 1 to 30% in long kapok fibres of a size of between 5 and 12mm and ii) a terracotta comprising between 30 and 95% by mass of clay and between 1 and 50% by mass of short cotton fibres of a size of between 0.5 and 1mm, said plastic paste once shaped being infiltrated by said terracotta.

2. Composite material according to claim 1, **characterised in that** it has no additive like "delaying agents" or "inorganic reinforcing loads".

3. Composite material according to claim 1 or 2, **characterised in that** the raw clay comprises phyllosilicates selected from among montmorillonites, vermiculites, illites, chlorites, saponite, beidellite, glauconite, kaolinite, muscovite, halloysite and talc.

4. Method for preparing a composite material for a use as a protective barrier against fire and/or water, **characterised in that** it comprises steps of:
a) preparing a plastic paste comprising between 30 and 95% by mass of clay, between 1 and 50% by mass of short cotton fibres of a size of between 0.5 and 1mm, between 1 to 30% in long kapok fibres of a size of between 5 and 12mm and between 20 and 200% of water with respect to the solid mass;
b) preparing a terracotta comprising between 30 and 95% by mass of clay, between 1 and 50% by mass of short cotton fibres of a size of between 0.5 and 1mm and of water in a sufficient quantity to obtain a density of between 1.3 and 2.1;
c) infiltrating under pressure of the plastic paste obtained in step a) with the terracotta obtained in step b).

5. Method according to claim 4, **characterised in that** said plastic paste is obtained by:
a) dry blending of clay and cotton fibres, to obtain a homogenous mixture,
b) wet blending of the mixture obtained in 5.a) adding water and long kapok fibres to obtain said plastic paste.

6. Method according to claim 4, **characterised in that** said terracotta is obtained by:
a) dry mixture of clay and short cotton fibres,
b) adding water,
c) maturing the terracotta.

7. Method according to any one of claims 4 to 6, **characterised in that** the added water comprises at least one surfactant.

8. Method according to any one of claims 4 to 7, **characterised in that** it comprises, beforehand in the step of infiltrating under pressure of the plastic paste with the terracotta, a step of shaping said plastic paste by laminating at ambient temperature to obtain preforms of uniform thickness, and possibly maturing preforms under controlled hygrometry.

9. Use of a composite material according to any one of claims 1 to 3, or of a composite material obtained by implementing the method according to any one of claims 4 to 8, for preparing protective packaging for objects.

10. Use of a composite material according to any one of claims 1 to 3, or of a composite material obtained by implementing the method according to any one of claims 4 to 8, for preparing a protective wall or screen in the construction field.

11. Use of a composite material according to any one of claims 1 to 3, or of a composite material obtained by implementing the method according to any one of claims 4 to 8, for preparing protective cases for electrical systems.
